(19) Europäisches Patentamt / European Patent Office / Office européen des brevets

(11) **EP 4 340 357 A2**

(12) **EUROPEAN PATENT APPLICATION**

(43) Date of publication:
**20.03.2024 Bulletin 2024/12**

(21) Application number: **24155265.2**

(22) Date of filing: **19.02.2021**

(51) International Patent Classification (IPC):
**H04N 19/117** $^{(2014.01)}$

(52) Cooperative Patent Classification (CPC):
**H04N 19/70; H04N 19/117; H04N 19/186; H04N 19/82; H04N 19/86**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.03.2020 JP 2020059931**

(62) Document number(s) of the earlier application(s) in accordance with Art. 76 EPC:
**21782416.8 / 4 114 001**

(71) Applicant: **KDDI Corporation Tokyo 163-8003 (JP)**

(72) Inventors:
• **UNNO, Kyohei**
  **Saitama, 356-8502 (JP)**
• **KAWAMURA, Kei**
  **Saitama, 356-8502 (JP)**
• **NAITO, Sei**
  **Saitama, 356-8502 (JP)**

(74) Representative: **Fink Numrich Patentanwälte PartmbB Paul-Gerhardt-Allee 24 81245 München (DE)**

Remarks:
This application was filed on 01-02-2024 as a divisional application to the application mentioned under INID code 62.

(54) **IMAGE DECODING DEVICE, IMAGE DECODING METHOD, AND PROGRAM**

(57) In an image decoding device 200 according to the present invention, a decoding unit 210 is configured to decode a flag indicating whether chroma-related syntax is included in a picture parameter set, and in a case where the flag indicates that chroma-related syntax is included in the picture parameter set, the decoding unit 210 is configured to decode syntax for controlling deblocking filter processing of a Cb signal and a Cr signal.

FIG. 5

| pic_parameter_set_rbsp() { | Descriptor |
|---|---|
| pps_pic_parameter_set_id | ue(v) |
| pps_seq_parameter_set_id | u(4) |
| ... | |
| pps_chroma_tool_offsets_present_flag | u(1) |
| ... | |
| deblocking_filter_control_present_flag | u(1) |
| if( deblocking_filter_control_present_flag) { | |
| deblocking_filter_override_enabled_flag | u(1) |
| pps_deblocking_filter_disabled_flag | u(1) |
| if( !pps_deblocking_filter_disabled_flag ) { | |
| pps_beta_offset_div2 | se(v) |
| pps_tc_offset_div2 | se(v) |
| if(pps_chroma_tool_offsets_present_flag) { | |
| pps_cb_beta_offset_div2 | se(v) |
| pps_cb_tc_offset_div2 | se(v) |
| pps_cr_beta_offset_div2 | se(v) |
| pps_cr_tc_offset_div2 | se(v) |
| } | |
| } | |
| } | |
| if( deblocking_filter_override_enabled_flag) | |
| dbf_info_in_ph_flag | u(1) |
| ... | |
| } | |

EP 4 340 357 A2

**Description**

TECHNICAL FIELD

The present invention relates to an image decoding device, an image decoding method, and a program.

BACKGROUND ART

In Non Patent Literature 1, for some syntaxes for controlling deblocking filter processing, a luma signal (Y signal) and a chroma signal (Cb signal and Cr signal) have individual syntaxes, and different values can be set for each color signal.

CITATION LIST

NON PATENT LITERATURE

Non Patent Literature 1: Versatile Video Coding (Draft 8), JVET-Q2001

SUMMARY OF INVENTION

TECHNICAL PROBLEM

However, Non Patent Literature 1 has a problem in that syntax for controlling the deblocking filter processing for the Y signal, the Cb signal, and the Cr signal always needs to be encoded and decoded irrespective of the color format of the sequence to be encoded and decoded.
Therefore, the present invention was conceived in view of the foregoing problem, and an object of the present invention is to provide an image decoding device, an image decoding method, and a program that are capable of reducing encoding/decoding processing and the quantity of bits of unnecessary syntax in a case where chroma data is not present in a sequence to be encoded and decoded, by encoding and decoding syntax for controlling the deblocking filter processing of the Cb signal and the Cr signal only in a case where the chroma signal data is present in this sequence.

SOLUTION TO PROBLEM

The first aspect of the present invention is summarized as an image decoding device including a decoding unit, wherein the decoding unit is configured to decode a flag indicating whether chroma-related syntax is included in a picture parameter set, and in a case where the flag indicates that chroma-related syntax is included in the picture parameter set, the decoding unit is configured to decode syntax for controlling deblocking filter processing of a Cb signal and a Cr signal.
The second aspect of the present invention is summarized as an image decoding method, including the steps of: decoding a flag indicating whether chroma-related syntax is included in a picture parameter set; and in a case where the flag indicates that chroma-related syntax is included in the picture parameter set, decoding syntax for controlling deblocking filter processing of a Cb signal and a Cr signal.
The third aspect of the present invention is summarized as a program used by an image decoding device, the program causing a computer to execute the steps of: decoding a flag indicating whether chroma-related syntax is included in a picture parameter set; and in a case where the flag indicates that chroma-related syntax is included in the picture parameter set, decoding syntax for controlling deblocking filter processing of a Cb signal and a Cr signal.

ADVANTAGEOUS EFFECTS OF INVENTION

According to the present invention, it is possible to provide an image decoding device, an image decoding method, and a program that are capable of reducing encoding/decoding processing and the quantity of bits of unnecessary syntax in a case where chroma data is not present in a sequence to be encoded and decoded, by encoding and decoding syntax for controlling the deblocking filter processing of the Cb signal and the Cr signal only in a case where the chroma signal data is present in this sequence.

BRIEF DESCRIPTION OF DRAWINGS

Fig. 1 is a diagram illustrating an example of a configuration of an image processing system 10 according to a first embodiment.

Fig. 2 is a diagram illustrating an example of functional blocks of an image decoding device 200 according to the first embodiment.

Fig. 3 is an example of a configuration of encoded data (a bit stream) received by a decoding unit 210 of the image decoding device 200 according to the first embodiment.

Fig. 4 is an example of control data included in an SPS 211.

Fig. 5 is an example of control data included in a PPS 212.

Fig. 6 is an example of control data included in a picture header 213.

Fig. 7 is an example of control data included in slice headers 214A/214B.

Fig. 8 is a diagram illustrating an example of functional blocks of an in-loop filter processing unit 250 of the image decoding device 200 according to the first embodiment.

Fig. 9 is a diagram illustrating an example of functional blocks of a deblocking filter unit 250A of the in-loop filter processing unit 250 of the image decoding device 200 according to the first embodiment.

Fig. 10 is a flowchart illustrating an example of a process flow of a filter determination unit 254A/254B of the in-loop filter processing unit 250 of the image decoding device 200 according to the first embodiment.

Fig. 11 is a diagram illustrating an example of a table that is used in the process flow of the filter determination unit 254A/254B of the in-loop filter processing unit 250 of the image decoding device 200 according to the first embodiment.

Fig. 12 is a diagram illustrating an example of functional blocks of an image encoding device 100 according to the first embodiment.

DESCRIPTION OF EMBODIMENTS

An embodiment of the present invention will be explained hereinbelow with reference to the drawings. Note that the constituent elements of the embodiment below can, where appropriate, be substituted with existing constituent elements and the like, and that a wide range of variations, including combinations with other existing constituent elements, is possible. Therefore, there are no limitations placed on the content of the invention as in the claims on the basis of the disclosures of the embodiment hereinbelow.

(First embodiment)

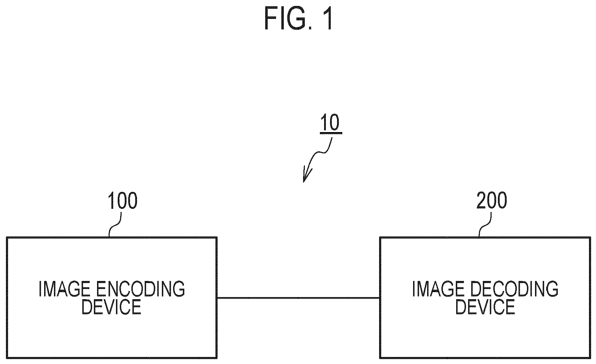

An image processing system 10 according to a first embodiment of the present invention is explained below with reference to Fig. 1 to Fig. 12. Fig. 1 is a diagram illustrating the image processing system 10 according to an embodiment according to this embodiment.

As illustrated in Fig. 1, the image processing system 10 includes an image encoding device 100 and an image decoding device 200.

The image encoding device 100 is configured to encode an input image signal to thereby generate encoded data. The image decoding device 200 is configured to decode the encoded data to generate an output image signal.

Such encoded data may be transmitted from the image encoding device 100 to the image decoding device 200 via a transmission line. The encoded data may be stored in a storage medium and then provided from the image encoding device 100 to the image decoding device 200.

(Image Decoding Device 200)

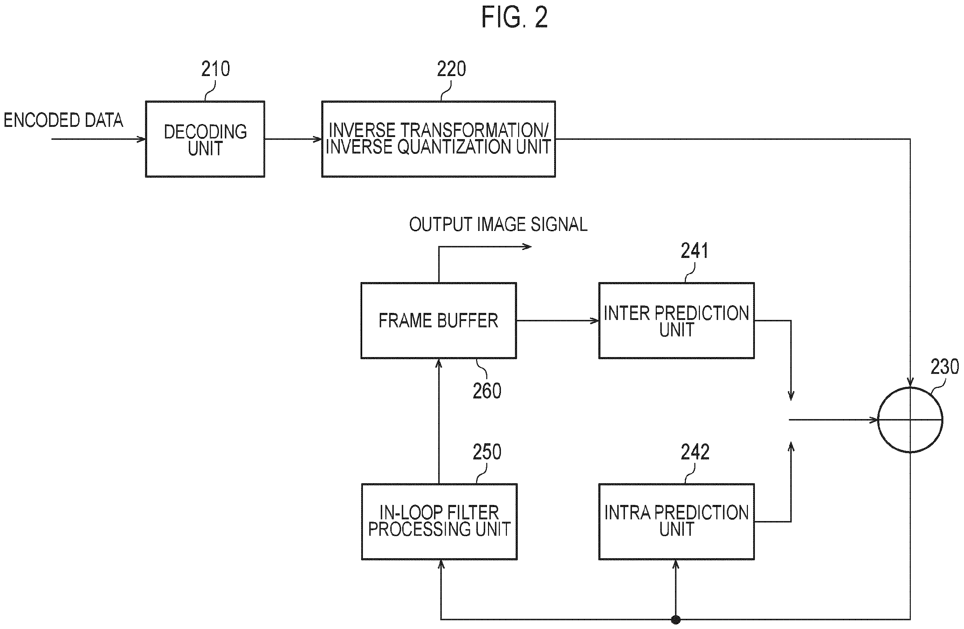

Hereinafter, the image decoding device 200 according to the present embodiment will be described with reference to Fig. 2. Fig. 2214 is a diagram illustrating an example of functional blocks of the image decoding device 200 according to the present embodiment.

As illustrated in Fig. 2, the image decoding device 200 includes a decoding unit 210, an inverse transformation/inverse quantization unit 220, an adder 230, an inter-prediction unit 241, an intra-prediction unit 242, an in-loop filter processing unit 250, and a frame buffer 260.

The decoding unit 210 is configured to decode the encoded data generated by the image encoding device 100 and decode a coefficient level value.

Here, for example, the decoding is the decoding of entropy-coded data that allocates a code of different lengths based on an occurrence probability of the coefficient level values.

Further, the decoding unit 210 may be configured to acquire the control data by decoding processing of the encoded data.

As described above, the control data may include size data such as a size of the encoded block (CU: Coding Unit), a size of the prediction block (PU: Prediction Unit), and a size of the transformation block (TU: Transform block).

The inverse transformation/inverse quantization unit 220 is configured to perform inverse transformation processing of the coefficient level value which is output from the decoding unit 210. Here, the inverse transformation/inverse quantization unit 220 may be configured to perform inverse quantization of the coefficient level value prior to the inverse transformation processing.

The adder 230 is configured to generate a decoded signal before filter processing by adding the prediction signal to a prediction residual signal which is output from the inverse transformation/inverse quantization unit 220, and output the decoded signal before filter processing to the intra-prediction unit 242 and the in-loop filter processing unit 250.

Here, the decoded signal before filter processing configures the reference block to be used by the intra-prediction unit 242.

The inter-prediction unit 241 is configured to generate a prediction signal by inter-prediction (prediction between the frames).

Specifically, the inter-prediction unit 241 is configured to generate a prediction signal for each prediction block based on a motion vector decoded from the encoded data and a reference signal included in the reference frame. The inter-prediction unit 241 is configured to output the prediction signal to the adder 230.

The intra-prediction unit 242 is configured to generate a prediction signal by intra-prediction (prediction in the frame).

Specifically, the intra-prediction unit 242 is configured to specify a reference block included in the target frame and generate a prediction signal for each prediction block based on the specified reference block. The intra-prediction unit 242 is configured to output the prediction signal to the adder 230.

The in-loop filter processing unit 250 is configured to perform filter processing on the decoded signal before filter processing that is output from the adder 230 and output the decoded signal after filter processing to the frame buffer 260.

Here, the in-loop filter processing may be implemented by a plurality of filter processing sets. For example, the filter processing is deblocking filter processing of reducing distortion occurring at a boundary portion of a block (an encoding block, a prediction block, a transformation block, or a sub-block obtained by dividing each of the encoding block, the prediction block, and the transformation block), or adaptive loop filter processing of switching a filter based on a filter coefficient or filter selection information transmitted from the image encoding device 100, a local property of a design of an image, or the like.

The frame buffer 260 is configured to accumulate the reference frames to be used by the inter-prediction unit 241.

Here, the decoded signal after filter processing is included in the reference frame to be used by the inter-prediction unit 241.

(Decoding unit 210)

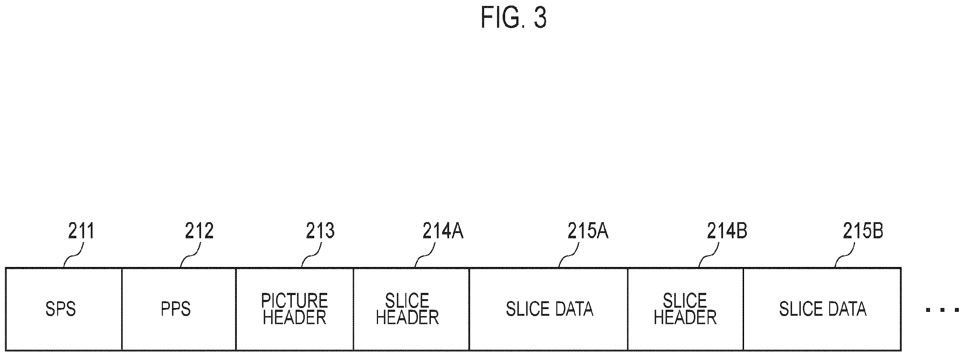

Control data decoded by the decoding unit 210 will be described hereinbelow with reference to Figs. 3 to 7.

Fig. 3 is an example of a configuration of encoded data (a bit stream) received by the decoding unit 210.

An SPS 211 may be included at the beginning of the bit stream. The SPS 211 is a set of control data in sequence (set of pictures) units. A specific example will be described subsequently. Each SPS 211 includes at least SPS id information for individual identification when a plurality of SPS 211 are present.

In such a bit stream, the PPS 212 may be included after the SPS 211. The PPS 212 is a set of control data in picture (a set of slices) units. Each PPS 212 includes at least PPS id information for individual identification when a plurality of PPS 212 are present. Each PPS 212 also includes at least SPS id information for designating the SPS 211 corresponding to each PPS 212.

In such a bit stream, a picture header 213 may be included after the PPS 212. The picture header 213 is also a set of control data in picture (set of slices) units. The PPS 212 is capable of sharing a single PPS 212 for a plurality of pictures. However, the picture header 213 is always transmitted for each picture. The picture header 213 includes at least PPS id information for designating the PPS 212 corresponding to each picture.

In such a bit stream, a slice header 214A may be included after the picture header 213. The slice header 214A is a set of control data in slice units. A specific example will be described subsequently. Information on the foregoing picture header 213 may be included as a portion of the slice header 214A.

In such a bit stream, slice data 215A may be included after the slice header 214A. The slice data 215A may include the foregoing coefficient level value, size data, and the like.

As described above, the configuration is a configuration in which slice headers 215A/215B, the picture header 213, the PPS 212, and the SPS 211 correspond one by one to the slice data 214A/215A. As described above, which PPS 212 is being referred to in the picture header 213 is designated by the PPS id, and which SPS 211 is being referred to in the PPS 212 is designated by the SPS id. Therefore, the SPS 211 and the PPS 212 common to the plurality of slice data 215A/215B can be used.

In other words, the SPS 211 and the PPS 211 do not necessarily need to be transmitted for each picture and for each slice. For example, as illustrated in Fig. 3, the configuration of a bitstream can be a configuration in which the SPS 211 and the PPS 212 are not encoded immediately before the slice header 214A/214B.

Note that the configuration of Fig. 3 is merely an example. As long as the configuration is such that the control data designated by the slice headers 214A/214B, the picture header 213, and the PPS 212 and the SPS 211 correspond to each piece of slice data 215A/215B, constituent elements other than those described above may be added as constituent elements of the bit stream. Similarly, the configuration may be shaped into a configuration different from that of Fig. 3 at the time of transmission.

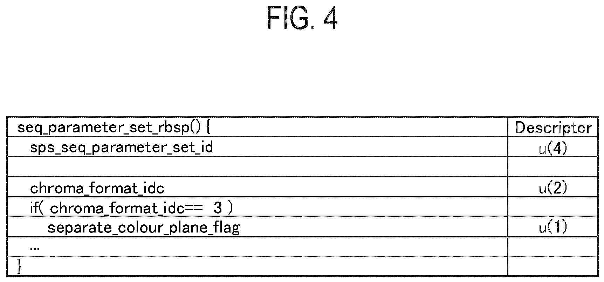

Fig. 4 is an example of control data included in the SPS 211.

As described above, the SPS 211 includes SPS id information (sps_seq_parameter_set_id) for identifying at least each SPS 211.

The SPS 211 may include chroma format information (chroma_format_idc) for the sequence. For example, the format can be defined to mean 4:0:0 format (monochrome) in a case where the value of chroma_format_idc is "0", mean 4:2:0 format in a case where the value of chroma_format_idc is "1", mean 4:2:2 format in a case where the value of chroma_format_idc is "2", and mean 4:4:4 format in a case where the value of chroma_format_idc is "3".

Furthermore, in a case where the value of chroma_format_idc is "3", that is, in a 4:4:4 format case, the SPS 211 may additionally include separate plane suitability information (separate_colour_plane_flag).

For example, in a case where the value of separate_colour_plane_flag is "0 ", the decoding unit 210 may be configured to perform decoding using a correlation between three color planes (for example, YCbCr, RGB, or the like), and in a case where the value of separate_colour_plane_flag is "1 ", to decode the color planes independently (each being regarded as a monochrome image).

Note that, in a case where separate_colour_plane_flag is not included in the SPS 211, the decoding unit 210 may regard the value of separate_colour_plane_flag as "0".

Furthermore, the decoding unit 210 may set the value of the variable ChromaArrayType by referring to the value of chroma_format_idc and the value of separate_colour_plane_flag described above.

For example, in a case where the value of separate_colour_plane_flag is "0", the decoding unit 210 may set the value of ChromaArrayType to the same value as the value of chroma_format_idc.

Further, in a case where the value of separate_colour_plane_flag is "1", the decoding unit 210 may set the value of chroma_format_idc to "0".

With the above definition, the ChromaArrayType = 0 case means a format (monochrome) case or a case where each color plane is regarded as a monochrome image and decoded in 4:4:4 format.

In other words, the ChromaArrayType = 0 case can be interpreted as a case where chroma data is not present in the sequence, and the ChromaArrayType != 0 case can be interpreted as a case where chroma data is present in the sequence.

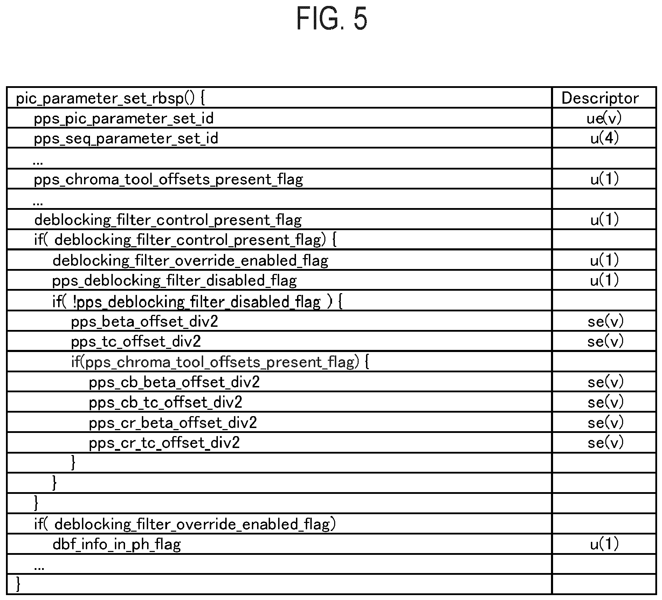

Fig. 5 is an example of control data included in the PPS 212.

As described above, the PPS 212 includes at least the PPS id information (pps_pic_parameter_set_id) for identifying each PPS 212. In addition, as described above, the PPS 212 includes at least pps_seq_parameter_set_id which is the SPS id information for designating the SPS 211 corresponding to the PPS 212.

The PPS 212 may include a flag (pps_chroma_tool_offsets_present_flag) indicating whether the chroma-related syntax is included in the PPS 212.

For example, in a case where the value of pps_chroma_tool_offsets_present_flag is "0", it may be defined that the chroma-related syntax is not included, and in a case where the value of pps_chroma_tool_offsets_present_flag is "1", it may be defined that the chroma-related syntax is included.

In a case where ChromaArrayType = 0, that is, in a case where there is no chroma data in the sequence, the value of pps_chroma_tool_offsets_present_flag may be restricted to "0".

The PPS 212 may include a flag (deblocking_filter_control_present_flag) indicating whether syntax for controlling deblocking filter processing (described subsequently) is included in the PPS 212.

For example, in a case where the value of deblocking_filter_control_present_flag is "0", it may be defined that the syntax for controlling the deblocking filter processing is not included, and in a case where the value of deblocking_filter_control_present_flag is "1", it may be defined that the syntax for controlling the deblocking filter processing is included.

Furthermore, in a case where the value of deblocking_filter_control_present_flag is "1", the PPS 212 may include deblocking_filter_override_enabled_flag as syntax for controlling the deblocking filter processing.

For example, in a case where the value of deblocking_filter_override_enabled_flag is "1", it may be defined that the overwriting of the deblocking filter processing control information included in the PPS 212 using the information included in the picture header 213 or the slice header 214A/214B (described subsequently) is allowed, and in a case where the value of deblocking_filter_override_enabled_flag is "0", it may be defined that the overwriting of the deblocking filter processing control information is not allowed.

Further, in a case where deblocking_filter_override_enabled_flag is not included in PPS 212, the decoding unit 210 may regard the value of deblocking_filter_override_enabled_flag as "0".

The PPS 212 may include a flag (pps_deblocking_filter_disabled_flag) that defines whether the deblocking filter processing is enabled or disabled in picture units.

For example, in a case where pps_deblocking_filter_disabled_flag = 0, it may be defined that the deblocking filter processing is enabled, and in a case where pps_deblocking_filter_disabled_flag = 1, it may be defined that the deblocking filter processing is disabled.

Further, in a case where pps_deblocking_filter_disabled_flag is not included in the PPS 212, the decoding unit 210 may regard the value of pps_deblocking_filter_disabled_flag as "0 (the deblocking filter processing is enabled)".

In a case where the value of pps_deblocking_filter_disabled_flag is "0" (when the deblocking filter processing is enabled), the PPS 212 may include pps_beta_offset_div2 and pps_tc_offset_div2.

The value of pps_beta_offset_div2 and the value of pps_tc_offset_div2 are used when calculating the values of the variable $\beta$ and the variable tC used in the deblocking filter processing of the luma signal (Y signal) to be described subsequently.

In a case where pps_beta_offset_div2 and pps_tc_offset_div2 are not included in the PPS 212, the decoding unit 210 may regard the respective values as "0".

Further, in a case where the value of pps_chroma_tool_offsets_present_flag is "1", the PPS 212 may include pps_cb_beta_offset_div2, pps_cb_tc_offset_div2, pps_cr_beta_offset_div2, and pps_cb_tc_offset_div2 used for calculating the variable $\beta$ and the variable tC used for the deblocking filter processing of the chroma signals (the Cb signal and the Cr signal), respectively.

In a case where pps_cb_beta_offset_div2, pps_cb_tc_offset_div2, pps_cr_beta_offset_div2, and pps_cb_tc_offset_div2 are not included in the PPS 212, the decoding unit 210 may regard the respective values as 0.

As described above, by including the syntax (pps_cb_beta_offset_div2, pps_cb_tc_offset_div2, pps_cr_beta_offset_div2, and pps_cb_tc_offset_div2) for controlling the deblocking filter processing for the chroma signal in the PPS 212 only in a case where the value of pps_chroma_tool_offsets_present_flag indicates that the chroma-related syntax is included in the PPS 212, for example, in a case where the picture is in the format, or in a case where the picture is decoded by regarding each color plane as a monochrome image in the 4:4:4 format, that is, in a case where chroma data is not present, it is possible to prevent unnecessary syntax from being included in the PP 212S. As a result, unnecessary decoding processing can be reduced, and the quantity of bits of the PPS 212 can be reduced.

Further, in a case where the value of deblocking_filter_override_enabled_flag is "1", the PPS 212 may include a flag (dbf_info_in_ph_flag) indicating whether information for controlling the deblocking filter processing is included in the picture header 213 to be described subsequently.

For example, in a case where dbf_info_in_ph_flag = 0, it may be defined that the deblocking filter control information is not included in the picture header 213, and in a case where dbf_info_in_ph_flag = 1, it may be defined that the deblocking filter control information is included in the picture header 213.

Furthermore, in a case where dbf_info_in_ph_flag is not included in the PPS 212, the decoding unit 210 may regard the value of dbf_info_in_ph_flag as "0".

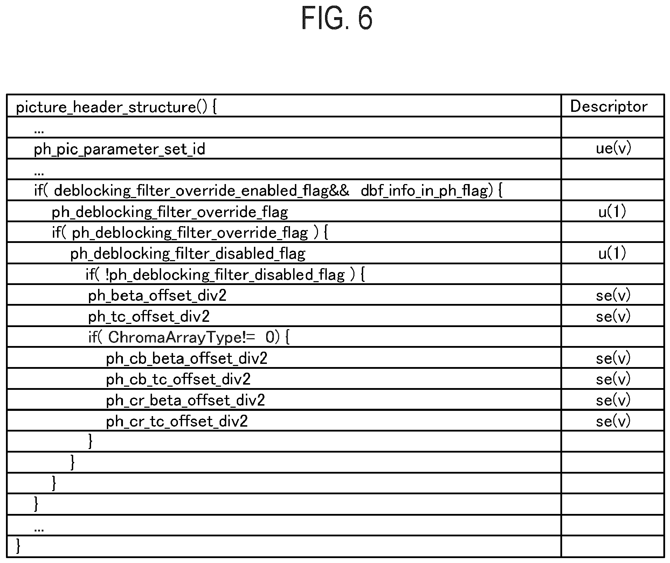

Fig. 6 is an example of control data included in the picture header 213.

As described above, the picture header 213 includes at least ph_pic_parameter_set_id, which is PPS id information for designating the PPS 212 corresponding to the picture header 213.

Further, in a case where the value of deblocking_filter_override_enabled_flag and the value of dbf_info_in_ph_flag, which pertain to the PPS 212 designated by ph_pic_parameter_set_id, are both "1", the picture header 213 may include ph_deblocking_filter_override_flag.

In a case where ph_deblocking_filter_override_flag is not included in the picture header 213, the decoding unit 210 may regard the value of ph_deblocking_filter_override_flag as "0".

In a case where the value of ph_deblocking_filter_override_flag is "1", the picture header 213 may include ph_deblocking_filter_disabled_flag.

When ph_deblocking_filter_disabled_flag = 1, this means that the deblocking filter processing is disabled in the slice corresponding to the picture header 213.

On the other hand, when ph_deblocking_filter_disabled_flag = 0, this means that the deblocking filter processing is enabled in the slice corresponding to the picture header 213.

In a case where ph_deblocking_filter_disabled_flag is not included in the picture header 213, the decoding unit 210 may regard the value of ph_deblocking_filter_disabled_flag as the same value as pps_deblocking_filter_disabled_flag.

In a case where the value of ph_deblocking_filter_disabled_flag is "0" (In a case where the deblocking filter processing is enabled), the picture header 213 may include ph_beta_offset_div2 and ph_tc_offset_div2.

The value of ph_beta_offset_div2 and the value of ph_tc_offset_div2 are used when calculating the values of the variable $\beta$ and the variable tC used in the deblocking filter processing of the luma signal (Y signal) to be described subsequently.

In a case where neither ph_beta_offset_div2 nor ph_tc_offset_div2 is included in the picture header 213, the decoding unit 210 may regard the respective values as the same values as pps_beta_offset_div2 and pps_tc_offset_div2.

Further, in a case where the value of ChromaArrayType is a value other than "0" (that is, when ChromaArrayType = 1, 2, or 3), the picture header 213 may include ph_cb_beta_offset_div2, ph_cb_tc_offset_div2, ph_cr_beta_offset_div2, and ph_cr_tc_offset_div2, which are used for calculating the variable β and the variable tC used for the deblocking filter processing of the chroma signals (the Cb signal and the Cr signal), respectively.

In a case where the picture header 213 does not include ph_cb_beta_offset_div2, ph_cb_tc_offset_div2, ph_cr_beta_offset_div2, and ph_cr_tc_offset_div2, the decoding unit 210 may regard the respective values as the same values as pps_cb_beta_offset_div2, pps_cb_tc_offset_div2, pps_cr_beta_offset_div2, and pps_cr_tc_offset_div2.

As described above, by including the syntax (ph_cb_beta_offset_div2, ph_cb_tc_offset_div2, ph_cr_beta_offset_div2, and ph_cr_tc_offset_div2) for controlling the deblocking filter processing of the chroma signal in the picture header 213 only when the value of ChromaArrayType indicates that the chroma data is present, for example, in a case where the picture is in the format, or in a case where the picture is decoded by regarding each color plane as a monochrome image in the 4:4:4 format, that is, in a case where the chroma data is not present, it is possible to prevent unnecessary syntax from being included in the picture header 213. As a result, unnecessary decoding processing can be reduced, and the quantity of bits of the picture header 213 can be reduced.

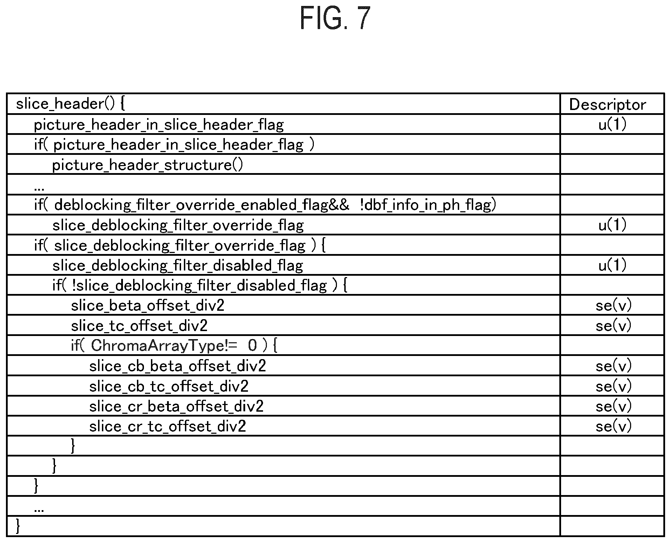

Fig. 7 is an example of control data included in slice headers 214A/214B.

The slice headers 214A/214B may include picture_header_in_slice_header_flag.

In a case where the value of picture_header_in_slice_header_flag is "1", the slice header 214A/214B can include the syntax of the picture header 213 described in Fig. 6 in the position of picture_header_structure () illustrated in Fig. 7.

Further, in a case where the value of deblocking_filter_override_enabled_flag and the value of dbf_info_in_ph_flag, which pertain to the PPS 212 designated by ph_pic_parameter_set_id in the picture header 213 corresponding to the slice header 214A/214B are both "1", the slice header 214A/214B may include slice_deblocking_filter_override_flag.

In a case where slice_deblocking_filter_override_flag is not included in the slice headers 214A/214B, the decoding unit 210 may regard the value of slice_deblocking_filter_override_flag as "0".

In a case where the value of slice_deblocking_filter_override_flag is "1", the picture header 214A/214B may include slice_deblockling_filter_disabled_flag.

Here, in a case where slice_deblockling_filter_disabled_flag = 1, this means that the deblocking filter processing is disabled in the slice. On the other hand, when slice_deblockling_filter_disabled_flag = 0, this means that the deblocking filter processing is enabled in the slice.

In a case where slice_deblockling_filter_disabled_flag is not included in the slice headers 214A/214B, the decoding unit 210 may regard the value of slice_deblockling_filter_disabled_flag to be the same value as ph_deblockling_filter_disabled_flag.

In a case where the value of slice_deblockling_filter_disabled_flag is "0" (when the deblocking filter processing is enabled), the slice header 214A/214B may include slice_beta_offset_div2 and slice_tc_offset_div2.

The value of slice_beta_offset_div2 and the value of slice_tc_offset_div2 are used when calculating the values of the variable β and the variable tC used for the deblocking filter processing of the luma signal (Y signal) to be described subsequently.

In a case where slice_beta_offset_div2 and slice_tc_offset_div2 are not included in slice headers 214A/214B, the decoding unit 210 may regard the respective values as the same values as ph_beta_offset_div2 and ph_tc_offset_div2.

Further, in a case where the value of ChromaArrayType is a value other than "0" (that is, when ChromaArrayType = 1, 2, or 3), the slice header 214A/214B may include slice_cb_beta_offset_div2, slice_cb_tc_offset_div2, slice_cr_beta_offset_div2, and slice_cr_tc_offset_div2 used for calculating the variable β and the variable tC used for the deblocking filter processing of the chroma signals (the Cb signal and the Cr signal), respectively.

In a case where slice_cb_beta_offset_div2, slice_cb_tc_offset_div2, slice_cr_beta_offset_div2, and slice_cr_tc_offset_div2 are not included in slice headers 214A/214B, the decoding unit 210 may regard the respective values as the same values as ph_cb_beta_offset_div2, ph_cb_tc_offset_div2, ph_cr_beta_offset_div2, and ph_cr_tc_offset_div2.

As described above, by including the syntax (slice_cb_beta_offset_div2, slice_cb_tc_offset_div2, slice_cr_beta_offset_div2, and slice_cr_tc_offset_div2) for controlling the deblocking filter processing of the chroma signal in the slice header 214A/214B only when the value of ChromaArrayType indicates that the chroma data is present, for example, in a case where the picture is in the format, or in a case where the picture is decoded by regarding each color plane as a monochrome image in the 4:4:4 format, that is, in a case where the chroma data is not present, it is possible to prevent unnecessary syntax from being included in the slice header 214A/214B. As a result, unnecessary decoding processing can be reduced, and the quantity of bits of slice header 214A/214B can be reduced.

The value of the flag described above is merely an example. In a case where the meaning given to the values of the flags ("0" and "1") is reversed, equivalent processing can be realized by reversing the corresponding processing accordingly. In addition, the decoding order may be reversed for syntaxes for which there is no reference relationship between the syntaxes. Furthermore, syntax other than the above syntax may be included in each of the SPS 211, the PPS 212, the picture header 213, and the slice headers 214A/214B.

(In-loop filter processing unit 250)

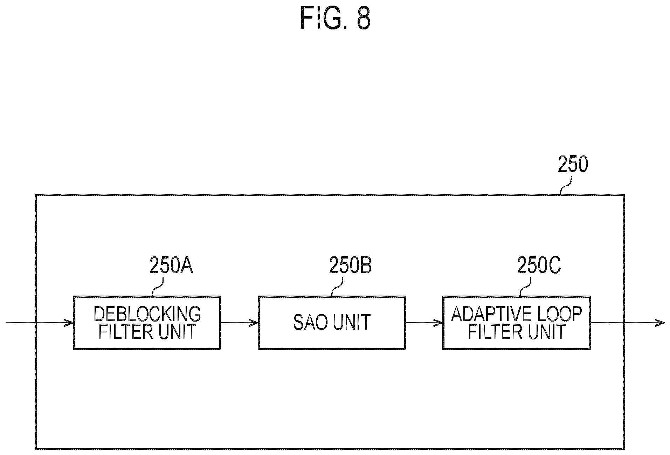

The in-loop filter processing unit 250 according to the present embodiment will be described hereinbelow with reference to Fig. 8. Fig. 8 is a diagram illustrating an example of functional blocks of an in-loop filter processing unit 250 of the image decoding device 200 according to the embodiment.

As illustrated in Fig. 8, the in-loop filter processing unit 250 includes a deblocking filter unit 250A, an SAO unit 250B, and an adaptive loop filter unit 250C.

The SAO unit 250B is a block that performs the sample adaptive offset processing, and known processing can be used, and thus a description of specific processing content is omitted.

Similarly, the adaptive loop filter unit 250C is a block that performs adaptive loop filter processing, and known processing can be used. Therefore, a description of specific processing content is omitted.

Hereinafter, an example of the processing content of the deblocking filter unit 250A will be described.

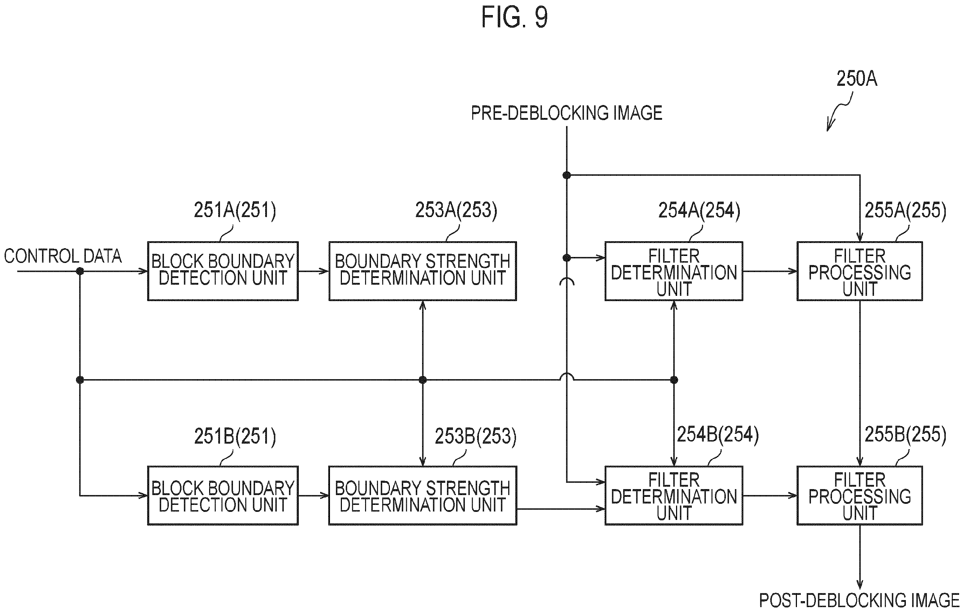

As illustrated in Fig. 9, the deblocking filter unit 250A has a block boundary detection unit 251, a boundary strength determination unit 253, a filter determination unit 254, and a filter processing unit 255.

Here, a configuration with "A" added to the end of the reference sign is a configuration relating to deblocking filter processing for vertical block boundaries, and a configuration with "B" added to the end is a configuration relating to deblocking filter processing for horizontal block boundaries.

A case where deblocking filter processing is performed with respect to horizontal block boundaries after deblocking filter processing is performed on vertical block boundaries is provided by way of an example hereinbelow.

The deblocking filter processing may be applied to encoded blocks, may be applied to prediction blocks, or may be applied to transform blocks, as described above. Further, the deblocking filter processing may be applied to the subblocks obtained by dividing each of the above blocks. In other words, the target block and adjacent blocks may be encoded blocks, prediction blocks, transform blocks, or subblocks obtained by dividing such blocks.

In cases where a deblocking filter is applied to subblocks, the blocks in the following description can, where appropriate, be read as subblocks.

Because the deblocking filter processing for vertical block boundaries and the deblocking filter processing for horizontal block boundaries are the same processing, the deblocking filter processing for vertical block boundaries will be described hereinbelow.

The block boundary detection unit 251A is configured to detect a boundary between blocks based on control data indicating block sizes. Here, the blocks are coding blocks (CU), prediction blocks (PU), and transform blocks (TU). Because a known method can be applied as a specific detection method, a detailed description thereof will be omitted.

The boundary strength determination unit 253A is configured to determine boundary strength of a block boundary between a target block and an adjacent block. For example, it may be defined that the boundary strength takes any one of three types of integer values, namely, "0", "1", and "2". As a specific method for calculating the boundary strength, a known method can be applied, and hence a detailed description thereof will be omitted.

The filter determination unit 254A is configured to determine the type of filter processing (for example, deblocking filter processing) to be applied to block boundaries.

For example, the filter determination unit 254A may be configured to determine whether or not to apply filter processing to a block boundary, and which filter processing (weak filter processing or strong filter processing) to apply to the block boundary, on the basis of the boundary strength of the block boundary, quantization parameters included in the target block and adjacent blocks, and the like.

Furthermore, the filter determination unit 254A may determine appropriateness/inappropriateness of filter processing, and filter strength (weak filter or strong filter) in different procedures for luma signal block boundaries and the block boundaries of chroma signals (Cb signals or Cr signals).

The filter determination unit 254A may be configured to determine that no filter processing is to be applied when the boundary strength of a block boundary is "0".

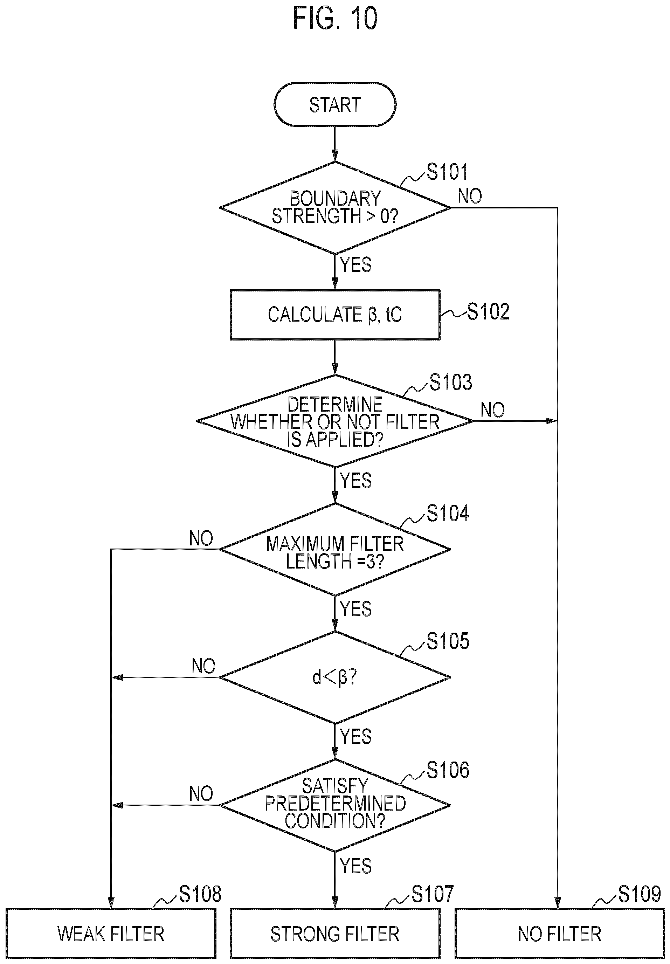

Hereinafter, an example of a specific processing procedure at a block boundary of a chroma signal (Cb signal or Cr signal) by the filter determination unit 254A will be described using Fig. 10. Hereinafter, a processing procedure for a Cb signal will be described, but the Cr signal can also be processed using a similar procedure.

In step S101, the filter determination unit 254A checks the boundary strength of the block boundary. In a case where the boundary strength is "0", this processing advances to step S109, and the filter determination unit 254A determines that the deblocking filter is not to be applied to the block boundary. In a case where the boundary strength is larger than "0", the processing advances to step S102.

In step S102, the filter determination unit 254A calculates the value of the variable β and the value of the variable tC.

First of all, a method for calculating the variable β will be described.

First, the filter determination unit 254A calculates the value of the variable Q as follows.

$$\texttt{Q = Clip3(0,63,QpC + (slice\_cb\_beta\_offset\_div2 <<}$$
$$\texttt{1))}$$

Here, QpC is, for example, the average value of the quantization parameters of two blocks adjacent to the block boundary.

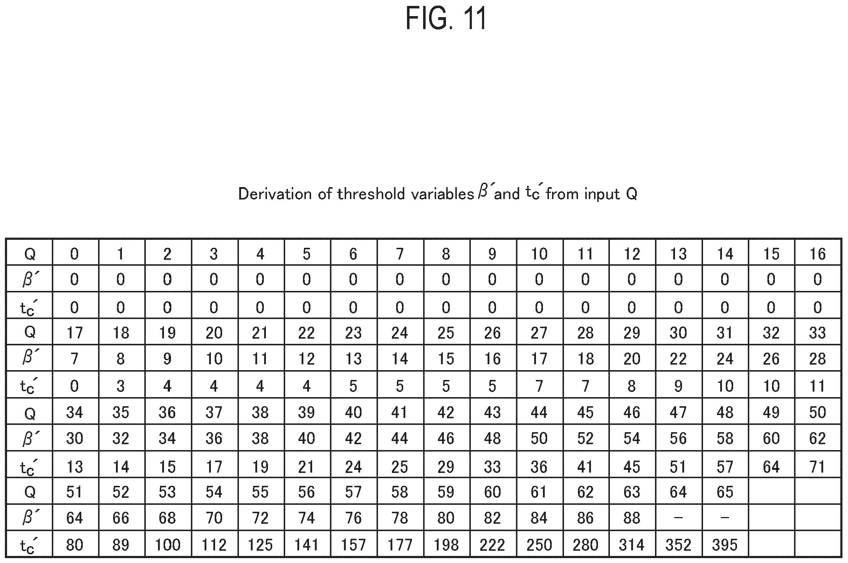

Second, the filter determination unit 254A determines β' by using the value of Q and the table illustrated in Fig. 11.

Third, the filter determination unit 254A calculates the variable β using the following formula based on β' determined above.

$$\texttt{β = β' × (1 << (BitDepth - 8))}$$

Here, BitDepth is an internal bit depth of a pixel value.

Next, a method for calculating the variable tC will be described.

First, the filter determination unit 254A calculates the value of the variable Q as follows.

$$\texttt{Q = Clip3(0,65,QpC + 2 × (bS - 1) +}$$
$$\texttt{(slice\_cb\_tc\_offset\_div2 << 1))}$$

Here, bS is the value of the boundary strength.

Second, the filter determination unit 254A determines tC ' by using the value of Q described above and the table illustrated in Fig. 11.

Third, the filter determination unit 254A calculates the variable tC by using the following equation based on tC' determined above.

$$\texttt{tC = (BitDeapth < 10)?(tC' + 2) >> (10 - BitDeapth):tC'}$$
$$\texttt{× (1 << (BitDeapth-10))}$$

As described above, the filter determination unit 254A calculates the value of the variable β and the value of the variable tC, and the processing advances to step S103.

In step S103, the filter determination unit 254A determines whether or not a filter is applied.

For example, in a case where the maximum filter lengths of the two blocks adjacent to the block boundary (for convenience, one is referred to as "block P" and the other is referred to as "block Q") are both "1 " and the boundary strength is not" 2 ", the present processing advances to step S109, and the filter determination unit 254A determines that a filter is not to be applied. Otherwise, the processing advances to step S104.

Note that the maximum filter length (maxFilterLengthP, maxFilterLengthQ) can be calculated in advance using the method disclosed in Non Patent Literature 1, for example.

In step S104, the filter determination unit 254A checks whether the maximum filter length (maxFilterLengthQ) corresponding to block Q is "3 ".

In a case where the maximum filter length (maxFilterLengthQ) corresponding to block Q is not "3 ", the processing advances to step S108, and the filter determination unit 254A determines that the weak filter is to be applied. Otherwise, this processing advances to step S105.

First, in step S105, the filter determination unit 254A calculates a variable d indicating the block noise likelihood of the block boundary. The variable d can be calculated by, for example, the method disclosed in Non Patent Literature 1.

Second, the filter determination unit 254A checks whether the variable d is smaller than the above-described variable β. When the variable d is smaller than the variable β, the processing advances to step S106. Otherwise, the processing advances to step S108, and the filter determination unit 254A determines that the weak filter is to be applied.

In step S106, the filter determination unit 254A checks whether or not all of the following three predetermined conditions are satisfied.

$$dpq < (\beta >> 2)$$

$$(Abs(p3 - P0) + Abs(q0 - q3)) < (\beta >> 3)$$

$$Abs(p0 - q0) < ((5 \times tC + 1))$$

Here, dpq is a variable indicating the block noise likelihood of the block boundary, similarly to the above-described variable d. Specifically, dpq can be calculated using, for example, the method disclosed in Non Patent Literature 1.

In addition, p0 and q0 are pixel values of pixels adjacent to the block boundary of block P and block Q. Similarly, p3 and q3 are pixel values of pixels located four pixels away from the block boundary of block P and block Q. Furthermore, Abs () is a function that returns an absolute value of an argument.

When all of the above three conditions are satisfied, the processing advances to step S107, and the filter determination unit 254A determines that the strong filter is to be applied. Otherwise, the processing advances to step S108, and the filter determination unit 254A determines that the weak filter is to be applied.

As described above, the filter determination unit 254A is capable of determining whether to apply a filter to the block boundary by using, for example, the values of the variable $\beta$ and the variable tC, and in the case of applying the filter, whether to use a weak filter or a strong filter.

In the above example, it can be seen that, as the value of the variable $\beta$ and the value of the variable tC become larger, the filter is more likely to be applied, and the strong filter is more likely to be applied as the type of filter.

Furthermore, the value of the variable $\beta$ and the value of the variable tC can be adjusted by, for example, slice_cb_beta_offset_div2 and slice_cb_tc_offset_div2 for the Cb signal, and the ease of applying the filter and the strength of the filter can be adjusted by setting the value of the syntax in picture units and slice units.

The filter processing unit 255A is configured to perform processing on the pre-deblocking image on the basis of the determination by the filter determination unit 254A. The processing performed on the pre-deblocking image can be: no filter processing, weak filter processing, or strong filter processing, or the like.

(Image Encoding Device 100)

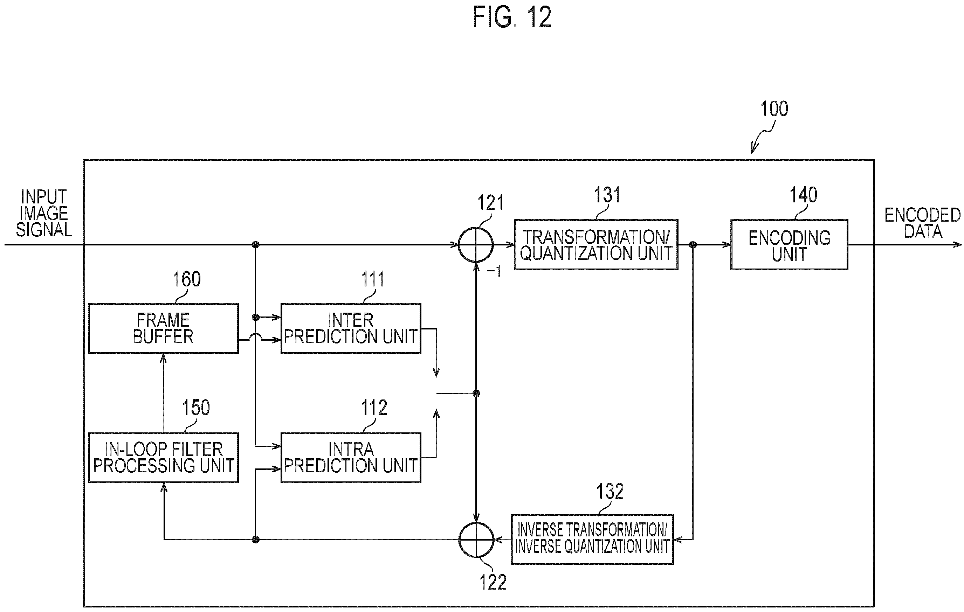

Hereinafter, the image encoding device 100 according to the present embodiment will be described with reference to Fig. 12. Fig. 12 is a diagram illustrating an example of functional blocks of the image encoding device 100 according to the present embodiment.

As illustrated in Fig. 12, the image encoding device 100 includes an inter prediction unit 111, an intra prediction unit 112, a subtractor 121, an adder 122, a transformation/quantization unit 131, an inverse transformation/inverse quantization unit 132, an encoding unit 140, an in-loop filter processing unit 150, and a frame buffer 160.

Similarly to the inter prediction unit 241, the inter prediction unit 111 is configured to generate a prediction signal through inter prediction (inter-frame prediction).

Specifically, the inter prediction unit 111 is configured to specify, through comparison of an encoding target frame (hereinafter, target frame) and a reference frame stored in the frame buffer 160, a reference block included in the reference frame and determine a motion vector with respect to the specified reference block.

The inter prediction unit 111 is configured to generate, based on the reference block and the motion vector, for each prediction block, the prediction signal included in the prediction block. The inter prediction unit 111 is configured to output the prediction signal to the subtractor 121 and the adder 122. The reference frame is a frame different from the target frame.

Similarly to the intra prediction unit 242, the intra prediction unit 112 is configured to generate the prediction signal through intra prediction (intra-frame prediction).

Specifically, the intra prediction unit 112 is configured to specify the reference block included in the target frame and generate, for each prediction block, the prediction signal based on the specified reference block. The intra prediction unit 112 is configured to output the prediction signal to the subtractor 121 and the adder 122.

The reference block is a block referred to about a prediction target block (hereinafter, target block). For example, the reference block is a block adjacent to the target block.

The subtractor 121 is configured to subtract the prediction signal from the input image signal and output a prediction remainder signal to the transformation/quantization unit 131. The subtractor 121 is configured to generate the prediction remainder signal, which is a difference between the prediction signal generated by the intra prediction or the inter prediction and the input image signal.

The adder 122 is configured to add the prediction signal to the prediction remainder signal output from the inverse transformation/inverse quantization unit 132 to generate a decoded signal before filter processing and output such a decoded signal before filter processing to the intra prediction unit 112 and the in-loop filter processing unit 150.

The decoded signal before filter processing configures the reference block used in the intra prediction unit 112.

The transformation/quantization unit 131 is configured to perform transformation processing of the prediction remainder signal and acquire a coefficient level value. Further, the transformation/quantization unit 131 may be configured to perform quantization of the coefficient level value.

The transformation processing for transforming the prediction remainder signal into a frequency component signal. In such transformation processing, a base pattern (a transformation matrix) corresponding to discrete cosine transform (DCT) may be used or a base pattern (a transformation matrix) corresponding to discrete sine transform (DST) may be used.

Similarly to the inverse transformation/inverse quantization unit 220, the inverse transformation/inverse quantization unit 132 is configured to perform inverse transformation processing of the coefficient level value output from the transformation/quantization unit 131. The inverse transformation/inverse quantization unit 132 is configured to perform inverse quantization of the coefficient level value prior to the inverse transformation processing.

The inverse transformation processing and the inverse quantization are performed in a procedure opposite to the transformation processing and the quantization performed in the transformation/quantization unit 131.

The encoding unit 140 is configured to encode the coefficient level value output from the transformation/quantization unit 131 and output encoded data.

For example, the encoding is entropy encoding for allocating a code of different length based on an occurrence probability of the coefficient level value.

The encoding unit 140 is configured to encode, in addition to the coefficient level value, control data used in decoding processing.

As described above, the control data may include size data such as the size of the encoding block, the size of the prediction block, and the size of the transformation block.

Similarly to the in-loop filter processing unit 250, the in-loop filter processing unit 150 is configured to perform filter processing on the decoded signal before filter processing output from the adder 122 and output a filtered decoded signal to the frame buffer 160.

The frame buffer 160 is configured to accumulate the reference frame used in the inter prediction unit 111.

The filtered decoded signal configures the reference frame used in the inter prediction unit 111.

Further, the image encoding device 100 and the image decoding device 200 may be realized as a program causing a computer to execute each function (each step).

Note that the above described embodiments have been described by taking application of the present invention to the image encoding device 10 and the image decoding device 30 as examples. However, the present invention is not limited only thereto, but can be similarly applied to an encoding/decoding system having functions of the image encoding device 10 and the image decoding device 30.

REFERENCE SIGNS LIST

10 Image processing system
100 Image encoding device
111, 241 Inter prediction unit
112, 242 Intra prediction unit
121 Subtractor
122, 230 Adder
131 Transformation/quantization unit
132, 220 Inverse transformation/inverse quantization unit
140 Encoding unit
150, 250 In-loop filter processing unit
160, 260 Frame buffer
200 Image decoding device
210 Decoding unit
211 SPS

212 PPS
213 Picture header
214A, 214B Slice header
215A, 215B Slice data
250A Deblocking filter unit
251, 251A, 251B Block boundary detection unit
253, 253A, 253B Boundary strength determination unit
254, 254A, 254B Filter determination unit
255, 255A, 255B Filter processing unit
250B SAO unit
250C Adaptive loop filter unit

**Claims**

1. An image decoding device, comprising:

   a decoding unit, wherein
   the decoding unit is configured to decode a first flag indicating whether or not a chroma-related syntax is included in a picture parameter set as a syntax of the picture parameter set,
   in a case where the first flag indicates that the chroma-related syntax is included in the picture parameter set, the decoding unit is configured to decode a syntax for controlling deblocking filter processing of a Cb signal and a Cr signal as the syntax of the picture parameter set,
   the decoding unit is configured to decode a second flag indicating whether or not deblocking filter processing is enabled in a picture corresponding to a target picture header as a syntax of a picture header,
   in a case where a value of the second flag indicates that the deblocking filter processing is enabled, the decoding unit is configured to decode a syntax for controlling deblocking filter processing of a luma signal as the syntax of the picture header, and
   in a case where a value of the second flag indicates that the deblocking filter processing is enabled and the syntax for controlling the deblocking filter processing of the Cb signal and the Cr signal is not included as the syntax of the picture header, the decoding unit is configured to regard a value of the syntax for controlling the deblocking filter processing of the Cb signal and the Cr signal of the picture header as a same value as a value of the syntax for controlling the deblocking filter processing of the Cb signal and the Cr signal which is decoded as the syntax of the picture parameter set.

2. An image decoding method, comprising the steps of:

   decoding a first flag indicating whether or not a chroma-related syntax is included in a picture parameter set as a syntax of the picture parameter set,
   decoding a syntax for controlling deblocking filter processing of a Cb signal and a Cr signal as the syntax of the picture parameter set, in a case where the first flag indicates that the chroma-related syntax is included in the picture parameter set,
   decoding a second flag indicating whether or not deblocking filter processing is enabled in a picture corresponding to a target picture header as a syntax of a picture header,
   decoding a syntax for controlling deblocking filter processing of a luma signal as the syntax of the picture header, in a case where a value of the second flag indicates that the deblocking filter processing is enabled, and
   regarding a value of the syntax for controlling the deblocking filter processing of the Cb signal and the Cr signal of the picture header as a same value as a value of the syntax for controlling the deblocking filter processing of the Cb signal and the Cr signal which is decoded as the syntax of the picture parameter set, in a case where a value of the second flag indicates that the deblocking filter processing is enabled and the syntax for controlling the deblocking filter processing of the Cb signal and the Cr signal is not included as the syntax of the picture header.

3. A program used by an image decoding device, the program causing a computer to execute the steps of:

   decoding a first flag indicating whether or not a chroma-related syntax is included in a picture parameter set as a syntax of the picture parameter set,
   decoding a syntax for controlling deblocking filter processing of a Cb signal and a Cr signal as the syntax of the picture parameter set, in a case where the first flag indicates that the chroma-related syntax is included in the picture parameter set,

decoding a second flag indicating whether or not deblocking filter processing is enabled in a picture corresponding to a target picture header as a syntax of a picture header,

decoding a syntax for controlling deblocking filter processing of a luma signal as the syntax of the picture header, in a case where a value of the second flag indicates that the deblocking filter processing is enabled, and regarding a value of the syntax for controlling the deblocking filter processing of the Cb signal and the Cr signal of the picture header as a same value as a value of the syntax for controlling the deblocking filter processing of the Cb signal and the Cr signal which is decoded as the syntax of the picture parameter set, in a case where a value of the second flag indicates that the deblocking filter processing is enabled and the syntax for controlling the deblocking filter processing of the Cb signal and the Cr signal is not included as the syntax of the picture header.

FIG. 1

10

100

IMAGE ENCODING
DEVICE

200

IMAGE DECODING
DEVICE

## FIG. 2

ENCODED DATA → **DECODING UNIT** (210) → **INVERSE TRANSFORMATION/ INVERSE QUANTIZATION UNIT** (220)

OUTPUT IMAGE SIGNAL

**FRAME BUFFER** → **INTER PREDICTION UNIT** (241)

260

**IN-LOOP FILTER PROCESSING UNIT** (250)

**INTRA PREDICTION UNIT** (242)

230

EP 4 340 357 A2

FIG. 3

| 211 | 212 | 213 | 214A | 215A | 214B | 215B |
|---|---|---|---|---|---|---|
| SPS | PPS | PICTURE HEADER | SLICE HEADER | SLICE DATA | SLICE HEADER | SLICE DATA | . . .

FIG. 4

| seq_parameter_set_rbsp() { | Descriptor |
|---|---|
|   sps_seq_parameter_set_id | u(4) |
| | |
|   chroma_format_idc | u(2) |
|   if( chroma_format_idc== 3 ) | |
|     separate_colour_plane_flag | u(1) |
|   ... | |
| } | |

# FIG. 5

| pic_parameter_set_rbsp() { | Descriptor |
|---|---|
| pps_pic_parameter_set_id | ue(v) |
| pps_seq_parameter_set_id | u(4) |
| ... | |
| pps_chroma_tool_offsets_present_flag | u(1) |
| ... | |
| deblocking_filter_control_present_flag | u(1) |
| if( deblocking_filter_control_present_flag) { | |
| deblocking_filter_override_enabled_flag | u(1) |
| pps_deblocking_filter_disabled_flag | u(1) |
| if( !pps_deblocking_filter_disabled_flag ) { | |
| pps_beta_offset_div2 | se(v) |
| pps_tc_offset_div2 | se(v) |
| if(pps_chroma_tool_offsets_present_flag) { | |
| pps_cb_beta_offset_div2 | se(v) |
| pps_cb_tc_offset_div2 | se(v) |
| pps_cr_beta_offset_div2 | se(v) |
| pps_cr_tc_offset_div2 | se(v) |
| } | |
| } | |
| } | |
| if( deblocking_filter_override_enabled_flag) | |
| dbf_info_in_ph_flag | u(1) |
| ... | |
| } | |

# FIG. 6

| picture_header_structure() { | Descriptor |
|---|---|
| ... | |
| ph_pic_parameter_set_id | ue(v) |
| ... | |
| if( deblocking_filter_override_enabled_flag&&   dbf_info_in_ph_flag) { | |
| ph_deblocking_filter_override_flag | u(1) |
| if( ph_deblocking_filter_override_flag ) { | |
| ph_deblocking_filter_disabled_flag | u(1) |
| if( !ph_deblocking_filter_disabled_flag ) { | |
| ph_beta_offset_div2 | se(v) |
| ph_tc_offset_div2 | se(v) |
| if( ChromaArrayType!= 0) { | |
| ph_cb_beta_offset_div2 | se(v) |
| ph_cb_tc_offset_div2 | se(v) |
| ph_cr_beta_offset_div2 | se(v) |
| ph_cr_tc_offset_div2 | se(v) |
| } | |
| } | |
| } | |
| } | |
| ... | |
| } | |

# FIG. 7

| slice_header() { | Descriptor |
|---|---|
| picture_header_in_slice_header_flag | u(1) |
| if( picture_header_in_slice_header_flag ) | |
| picture_header_structure() | |
| ... | |
| if( deblocking_filter_override_enabled_flag&&  !dbf_info_in_ph_flag) | |
| slice_deblocking_filter_override_flag | u(1) |
| if( slice_deblocking_filter_override_flag ) { | |
| slice_deblocking_filter_disabled_flag | u(1) |
| if( !slice_deblocking_filter_disabled_flag ) { | |
| slice_beta_offset_div2 | se(v) |
| slice_tc_offset_div2 | se(v) |
| if( ChromaArrayType!=  0 ) { | |
| slice_cb_beta_offset_div2 | se(v) |
| slice_cb_tc_offset_div2 | se(v) |
| slice_cr_beta_offset_div2 | se(v) |
| slice_cr_tc_offset_div2 | se(v) |
| } | |
| } | |
| } | |
| ... | |
| } | |

# FIG. 8

250

| 250A | 250B | 250C |
|---|---|---|
| DEBLOCKING FILTER UNIT | SAO UNIT | ADAPTIVE LOOP FILTER UNIT |

# FIG. 9

EP 4 340 357 A2

# FIG. 10

```
                    ┌─────────┐
                    │  START  │
                    └─────────┘
                         │
                         ▼                    S101
              ◇ BOUNDARY          ◇─── NO ──────────┐
              ◇ STRENGTH > 0?     ◇                 │
                    │                              │
                   YES                             │
                    ▼                              │
            ┌──────────────────┐   S102            │
            │  CALCULATE β, tC  │                   │
            └──────────────────┘                   │
                    │                              │
                    ▼                    S103       │
          ◇    DETERMINE          ◇─── NO ─────┐    │
          ◇ WHETHER OR NOT FILTER ◇            │    │
          ◇    IS APPLIED?        ◇            │    │
                    │                          │    │
                   YES                         │    │
                    ▼                S104        │    │
   ┌── NO ──◇ MAXIMUM FILTER   ◇               │    │
   │        ◇   LENGTH =3?      ◇               │    │
   │              │                            │    │
   │             YES                           │    │
   │              ▼            S105             │    │
   │── NO ──◇      d<β?       ◇                │    │
   │              │                            │    │
   │             YES                           │    │
   │              ▼            S106             │    │
   │── NO ──◇   SATISFY        ◇               │    │
   │        ◇ PREDETERMINED    ◇               │    │
   │        ◇  CONDITION?      ◇               │    │
   │              │                            │    │
   │             YES                           │    │
   ▼              ▼                            ▼    ▼
┌──────────┐  ┌──────────────┐            ┌───────────┐
│WEAK FILTER│  │ STRONG FILTER │            │ NO FILTER │
└──────────┘  └──────────────┘            └───────────┘
   S108          S107                         S109
```

# FIG. 11

Derivation of threshold variables $\beta'$ and $t_c'$ from input Q

| Q | 0 | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|---|
| $\beta'$ | 0 | 0 | 0 | 0 | 0 | 0 | 0 | 0 | 0 | 0 | 0 | 0 | 0 | 0 | 0 | 0 | 0 |
| $t_c'$ | 0 | 0 | 0 | 0 | 0 | 0 | 0 | 0 | 0 | 0 | 0 | 0 | 0 | 0 | 0 | 0 | 0 |
| Q | 17 | 18 | 19 | 20 | 21 | 22 | 23 | 24 | 25 | 26 | 27 | 28 | 29 | 30 | 31 | 32 | 33 |
| $\beta'$ | 7 | 8 | 9 | 10 | 11 | 12 | 13 | 14 | 15 | 16 | 17 | 18 | 20 | 22 | 24 | 26 | 28 |
| $t_c'$ | 0 | 3 | 4 | 4 | 4 | 4 | 5 | 5 | 5 | 5 | 7 | 7 | 8 | 9 | 10 | 10 | 11 |
| Q | 34 | 35 | 36 | 37 | 38 | 39 | 40 | 41 | 42 | 43 | 44 | 45 | 46 | 47 | 48 | 49 | 50 |
| $\beta'$ | 30 | 32 | 34 | 36 | 38 | 40 | 42 | 44 | 46 | 48 | 50 | 52 | 54 | 56 | 58 | 60 | 62 |
| $t_c'$ | 13 | 14 | 15 | 17 | 19 | 21 | 24 | 25 | 29 | 33 | 36 | 41 | 45 | 51 | 57 | 64 | 71 |
| Q | 51 | 52 | 53 | 54 | 55 | 56 | 57 | 58 | 59 | 60 | 61 | 62 | 63 | 64 | 65 | | |
| $\beta'$ | 64 | 66 | 68 | 70 | 72 | 74 | 76 | 78 | 80 | 82 | 84 | 86 | 88 | — | — | | |
| $t_c'$ | 80 | 89 | 100 | 112 | 125 | 141 | 157 | 177 | 198 | 222 | 250 | 280 | 314 | 352 | 395 | | |

## FIG. 12